(19) Europäisches Patentamt
European Patent Office
Office européen des brevets

(11) **EP 3 789 219 B1**

(12) **EUROPEAN PATENT SPECIFICATION**

(45) Date of publication and mention
of the grant of the patent:
**13.04.2022 Bulletin 2022/15**

(21) Application number: **20194229.9**

(22) Date of filing: **03.09.2020**

(51) International Patent Classification (IPC):
**B60G 99/00** (2010.01)     **B60G 11/26** (2006.01)
**B60G 17/056** (2006.01)     **B62D 33/06** (2006.01)
**F16F 9/19** (2006.01)     **F16F 9/46** (2006.01)
**F16F 9/516** (2006.01)     **B60G 17/015** (2006.01)
**F16F 9/56** (2006.01)

(52) Cooperative Patent Classification (CPC):
**B60G 99/002; B60G 11/265; B60G 17/0152;**
**B60G 17/056; B62D 33/0608; F16F 9/56;**
B60G 2202/154; B60G 2204/162; B60G 2300/082;
B60G 2400/252; B60G 2400/5122; B60G 2500/104;
B60G 2500/114; B60G 2500/30; B60G 2600/11;
(Cont.)

(54) **SUSPENSION HYDRAULIC ARRANGEMENT FOR A WORK VEHICLE**

HYDRAULISCHE AUFHÄNGUNGSANORDNUNG FÜR EIN ARBEITSFAHRZEUG

AGENCEMENT DE SUSPENSION HYDRAULIQUE POUR UN VÉHICULE DE TRAVAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2019 IT 201900015590**

(43) Date of publication of application:
**10.03.2021 Bulletin 2021/10**

(73) Proprietor: **CNH Industrial Italia S.p.A.**
**10135 Torino (IT)**

(72) Inventors:
• **Lenzini, Nicola**
**41027 Pievepelago (IT)**

• **Paolini, Francesco**
**41122 Modena (IT)**

(74) Representative: **CNH Industrial IP Department**
**Leon Claeysstraat 3A**
**8210 Zedelgem (BE)**

(56) References cited:
WO-A1-2007/097699     DE-A1-102010 008 723
US-A1- 2004 112 659     US-A1- 2005 252 699
US-B2- 9 879 744

(52) Cooperative Patent Classification (CPC): (Cont.)
B60G 2800/012; B60G 2800/014; B60G 2800/019;
B60G 2800/912; F16F 9/19; F16F 9/46

**Description**

TECHNICAL FIELD

The present invention concerns a suspension hydraulic arrangement, in particular a semi-active suspension hydraulic arrangement for a cab of a work vehicle, especially an off-road vehicle such as an agricultural vehicle.

BACKGROUND OF THE INVENTION

The motion of the cab of a vehicle with respect to the chassis thereof is an annoying movement for the comfort of the driver of the vehicle. Such inconvenience is even greater when the vehicle is an off-road vehicle, such as an agricultural vehicle.

To reduce such annoying movement, it is known to provide different typologies of suspension arrangement to dampen such annoying motions.

An example of suspension arrangement are hydraulic suspensions. However, such suspension hydraulic arrangements, are not always capable of providing a suitable dampening in all possible working condition of the vehicle. US2005252699 discloses an hydraulic circuit that controls flow of fluid between two cylinder chambers and between the chambers and an accumulator to dampen motion of the frame relative to the axle.

In particular, the need is felt to improve known suspension hydraulic arrangements to further reduce cab motion in a wide operation range of the vehicle in an optimized and cost-effective way.

An aim of the present invention is to satisfy the above mentioned needs in an optimized and cost-effective way.

SUMMARY OF THE INVENTION

The aforementioned aim is reached by a suspension hydraulic arrangement and a work vehicle as claimed in the appended set of claims.

BRIEF DESCRIPTION OF DRAWINGS

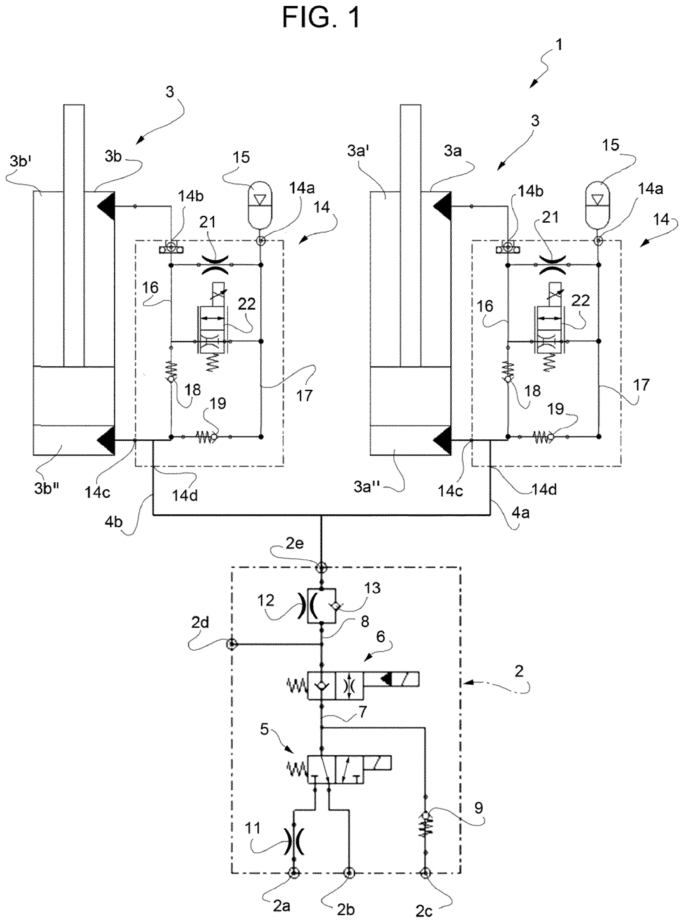

For a better understanding of the present invention, a preferred embodiment is described in the following, by way of a non-limiting example, with reference to the attached drawings wherein the only figure 1 is a hydraulic scheme representing a suspension arrangement according to the invention.

DETAILED DESCRIPTION OF THE INVENTION

Figure 1 discloses a suspension hydraulic arrangement 1 for the cab of a work vehicle (not shown).

In particular such work vehicle, e.g. an agricultural vehicle such as a tractor, comprises, as usual, a chassis and a cab. Preferably, in a common configuration, the suspension hydraulic arrangement 1 is provided to connect the two rear corners of the cab to the chassis, while the two front corners of the cab are directly mechanically coupled the chassis, e.g. via joints or hinges.

According to the above, suspension hydraulic arrangement 1 comprises at least a pair of cylinders 3, namely a right and a left cylinder 3a, 3b. As known, each cylinder 3a, 3b comprises a casing, fixedly carried by the chassis of the work vehicle, and a piston carried by a respective rod, connected to the cab of the work vehicle, and sliding in tight manner inside the casing so as to define two different chambers, i.e. a rod chamber 3a', 3ab' and a piston chamber 3a", 3b". The upside-down installation is also possible without any behavior difference. The latter described is usually preferred to protect the road seal by dirty elements.

Suspension hydraulic arrangement 1 further comprises a levelling module 2 fluidly interposed between a source of fluid in pressure (not shown), e.g. a pump, of the work vehicle and cylinders 3a, 3b. Accordingly, levelling module 2 comprises a first port 2a fluidly connectable to the aforementioned source of fluid in pressure, a second port 2b fluidly connectable to a discharge, and a third port 2c fluidly connectable to a load sensing module, not shown, of the vehicle. As known, such load-sensing module is configured to control the pressure coming from first port 2a according to the entity of the load-sensing signal.

Levelling module 2 further comprises a fourth port 2d configured to allow the sensing the system pressure with a pressure transducers and a fifth port 2e fluidly connected to right and left cylinders 3a, 3b thanks to respective conduits 4a, 4b.

Levelling module 2 comprises a first and a second selection valves 5, 6 fluidly interposed in series between said first and second ports 2a, 2b and fifth port 2e.

In greater detail, first valve 5 is configured to assume a first position into which it allows the passage of fluid from first port 2a towards second selection valve 6 via a first intermediate conduit 7 and a second position into which it allows the passage of fluid from second selection valve 6 towards discharge, via second port 2b. Accordingly, first valve 5 is a three ways - two positions valve; preferably first valve 5 is a electro-actuated valve and comprises, as usual, an elastic elements configured to maintain such valve in one of the aforementioned positions, e.g. second position.

Second selection valve 6 is configured to assume a first position into which it allows the passage of fluid only from first valve 5 towards fifth port 2e via a second intermediate conduit 8 and a second position into which it allows fluidic communication between first valve 5 and fifth port 2e via second intermediate conduit 8. Accordingly, second valve 6 is a two ways - two positions valve; preferably second valve 6 is an electro-hydraulic actuated valve and comprises, as usual, an elastic elements configured to maintain such valve in one of the aforementioned positions, e.g. first position.

First intermediate conduit 7 is furthermore fluidly connected to third port 2c in a position comprised between first and second selection valves 5, 6. In particular, levelling module 2 may comprise a check valve 9 fluidly interposed between first intermediate conduit 7 and third port 2c and configured to allow the passage of fluid only towards third port 2c.

Second intermediate conduit 8 is furthermore fluidly connected to fourth port 2d to measure system pressure, when needed.

Levelling module 2 further comprises a first orifice 11 fluidly interposed between first opening 2a and first valve 5 and a second orifice 12 fluidly interposed between second valve 6 and fifth port 2e. Advantageously, first and second orifice 11, 12 have a different value, preferably second orifice is smaller with respect to first orifice. For sake of example, second orifice is about 20% smaller than first orifice.

Furthermore, levelling module 2 comprises a non-return valve 13 fluidly interposed in parallel to second orifice 12 and configure to allow passage of fluid only from second valve 6 towards fifth port 2e.

Suspension hydraulic arrangement 1 furthermore comprises, for each between right and left cylinders 3a, 3b, a respective cylinder fluid management module 14, i.e. a damping module 14, and a respective accumulator module, e.g. comprising a single accumulator 15, as described in the present embodiment. Accumulator module, as known, is configured to store fluid in pressure; fluid management module 14 is fluidly interposed between each accumulator module and the respective cylinder 3a, 3b and it is configured to control the fluid passage from accumulator module to rod and piston chambers 3a', 3a", 3b', 3b".

Making reference to only the right cylinder 3a for sake of brevity, being the left one identical, module 14 comprises a first port 14a fluidly connected to accumulator 15, a second port 14b fluidly connected to rod chamber 3a', a third port fluidly connected to piston chamber 3a" and a fourth port 14d fluidly connected to conduit 4a, i.e. to levelling module 2.

In particular, module 14 comprises a first intermediate conduit 16 fluidly connecting second port 14b and third port 14c and a second intermediate conduit 17 fluidly connecting first port 14a with first intermediate conduit 16.

In particular, fourth port 14d is fluidly connected to first intermediate conduit 16 in a position between third port 16c and the connection of second intermediate conduit 17 with first intermediate conduit 16.

Module 14 comprises a first check valve 18 fluidly interposed on first intermediate conduit 16 and configured to allow passage of fluid only from third to second ports 14c, 14b. Module 14 further comprises a second check valve 19 fluidly interposed on second intermediate conduit 17 and configured to allow passage of fluid only from first opening 14a towards first intermediate conduit 16.

Module 14 further comprises an orifice 21 fluidly interposed between first and second intermediate conduits 16, 17 in a position, on first conduit 16, downstream with respect to first check valve 18 and, on second conduit 17, in a position upstream second check valve 19. Clearly, the terms upstream and downstream in this paragraph are meant according to the allowed direction of fluid through the check valves 18, 19. Preferably, orifice 21 is a fixed dimension orifice.

Module 14 further comprises a valve 22 fluidly interposed between first and second intermediate conduits 16, 17 in a position, on first conduit 16, downstream with respect to first check valve 18 but upstream with respect to the connection of orifice 21 and, on second conduit 17, in a position upstream second check valve 19 but downstream with respect to the connection of orifice 21. According to the above, orifice 21 and valve 22 are fluidly in parallel one with respect to the other between first and second intermediate conduits 16, 17. Clearly, the terms upstream and downstream in this paragraph are meant according to the allowed direction of fluid through the check valves 18, 19.

Advantageously, valve 22 is a proportional valve configured to allow fluidic communication between first and second intermediate conduits 16, 17 between a first position into which it allows fully communication and a second position into which it allows a restricted, i.e. likewise it was present an orifice, communication between these latter. Accordingly, valve 22 is a two ways proportional valve.

Advantageously, valve 22 is an electro-actuated valve via a solenoid, whose actuation is proportional to a current signal provided to valve 22, as better described in the following.

Suspension hydraulic arrangement 1 advantageously comprises sensors means (not shown) configured to detect a value related to operation of hydraulic cylinders 3. Preferably, sensor means comprise pressure means configured to detect pressure in piston and/or road chambers 3a', 3b', 3a'', 3b'' and/or position sensor configured to detect the position of piston with respect to its end stop positions.

Suspension hydraulic arrangement 1 advantageously comprises an electronic control unit (not shown) electrically connected to valves 5, 6 and 22, to the aforementioned cylinder sensor means and to other sensors of the work vehicle, e.g. velocity, brake, position acceleration sensors. Preferably such electronic control unit may be the ECU of the work vehicle.

Accordingly, the electronic control unit is configured to control the operation of valves 5, 6 and 22 according to the input collected by the above-mentioned cylinder and vehicle sensors, according to preset logics. Therefore, electronic control unit comprises elaboration means configured to collect the aforementioned data, elaborate this latter according to the preset logics and control as output valves 5, 6 and 22.

The operation of the above described hydraulic arrangement 1 is the following.

First, oil in the hydraulic arrangement, i.e. suitable for varying height of cylinders/ cab, may be varied thanks to levelling module 2.

Indeed, first valve 5 may be controlled to assume its first position and second valve 6 may be modulated to vary the amount of fluid coming from source of fluid in pressure via first port 2a. Such fluid will pass through first narrowing 11, while it will bypass second narrowing 12 thanks to non-return valve 13.

Conversely, when it is needed to spill fluid from suspension arrangement 1, first valve will assume its second position, thereby connecting fifth port 2e with discharge via second port 2b. Second valve 6 may be modulated to vary such flow of fluid passing to discharge. In such case, since non-return valve 13 do not allows passage of fluid, such passage is realized through second orifice 12.

According to the above, it is clear that there is a difference in speed between raising and lowering fluid level in cylinders 3 because of the intrinsically difference given by orifices 11, 12.

In parallel, module 14 is configured to vary the dampening effect given by each cylinder 3. Indeed, the valve 22 may be regulated to vary the resistance of the fluidic communication that can by-pass orifice 21.

Supposing that piston chamber 3a" is compressed, then fluid will directly flow from this latter via first intermediate conduit 16 through check valve 18 to rod chamber 3a'. Supposing that rod chamber 3a' is compressed, then fluid will flow towards first intermediate conduit 16 via second orifice 14b and will pass through orifice 21 only if the resistance given by valve 22 is greater.

Accordingly, it is possible to set a plurality of different resistance level, i.e. dampening level of cylinder 3, thereby providing a versatile suspension arrangement 1. In particular, when resistance of valve 22 is at its maximum level, fluid may pass only from orifice 21, thereby having a substantially passive system.

Furthermore, it has to be noted that in compression the oil that passes into the module 14 is proportional to the area of piston chamber 3a" while in rebound, the oil that passes into module 14 is proportional to annular area of rod chamber 3a' around rod. Accordingly, it is clear that flow coming from piston chamber 3a" is greater with respect to the flow coming from road chamber 3a".

According to the above, and thanks to check valves 18 and 19 the damping is differentiated with respect to the direction of travel of the cylinder. Indeed, in rebound, all oil from rod chamber 3a' passes through valve 22 and orifice 21 towards piston chamber 3a" since check valve 18 denies the passage of fluid. Conversely, because of the stop of check valve 19, flow passes from piston chamber 3a" in part through valve 22 and orifice 21 and in part directly to rod chamber 3a' . Accordingly, it is clear that in orifice 21 and valve 22 there is a lower rate of oil in compression with respect to rebound. Therefore, the resistance in rebound is greater with respect to the resistance in compression.

According to the above, it is further disclosed a method for controlling a suspension hydraulic arrangement 1 as described above comprising the following steps:

- Detecting an operative condition of cylinders 3 and/or work vehicle;
- Elaborating a control strategy according to the above detected operative conditions;
- Control accordingly valves 5, 6 and 22.

A first example of control can be a background basic control, in which an auto-levelling (via levelling module 2) and a basic sky-hook control mode (via module 14) may be achieved.

The auto-levelling function foresees the capability of the system to auto center again in a mean position of cylinder 3 for compensating load or drift phenomena. In particular, a closed loop or open loop control may be used to achieve the return of cylinder 3 in mean position value, as known. Such function obviously needs the knowledge of pressures and position into cylinders 3.

Basic sky-hook foresees the capability of the system to decouple the movement of the cab, coupled to the rod of cylinders 3 with respect to chassis, coupled with casing of cylinders 3. Such sky-hook control is per se known and is based on the mathematical model assumption that the cab is connected to the sky via a shock-absorber. According to such model, valve 22 may be controlled according to a preset function:

$$i = f(V_{cab}; V_{chassis})$$

i.e. by a current which is function of the velocity of the cab and of the chassis with respect to a predefined absolute reference point.

A second example of control can be an advanced control, in which an auto-levelling (via levelling module 2) and a configurable sky-hook control mode (via module 14) may be achieved.

Auto-levelling is identical as in the previous case, accordingly is not described for sake of brevity.

Also Sky-hook control is substantially the same as before, with the difference that the operator may select, e. g. via a button or a command on a dashboard, an automatic value which is the basic configuration mentioned above where $i = f(V_{cab}; V_{chassis})$ ,a soft or a hard configuration wherein the coefficient of the function determining the value of current for controlling valve 22 are adjusted to provide a softer or harder damping in cylinders 3.

A third example of control can be represented by a plurality of feed-forward controls which can run in parallel with the aforementioned background controls according to first and second examples of control.

In practice, according to predefined work vehicle conditions, damping of cylinders 3 may be controlled consequently to adapt in advance.

A first feedforward control can be designed to reduce cab squat/pitch in acceleration or deceleration, accordingly:

$$i = f(V_{current}; V_{target})$$

i.e. monitoring a current velocity of the vehicle with respect to a target velocity to be reached by this latter. A second feedforward control can be designed to reduce cab dive/pitch while braking, accordingly:

$$i = f(V_{initial}; V_{final})$$

i.e. monitoring a initial velocity of the vehicle with respect to a target final decelerated velocity.

A third feedforward control can be designed to reduce cab roll while turning or step steering, accordingly:

$$i = f(Steering_{angle}; Steering_{rate})$$

i.e. monitoring the steering angle and the steering rate of the vehicle.

A fourth feedforward control can be designed to reduce cab pitch while changing travel direction, accordingly:

$$i = f(V_{current}; Shuttle_{request})$$

i.e. monitoring the current velocity of the vehicle and a shuttle request (i.e. passing from forward to rearward motion).

A fifth feedforward control can be designed to reduce cab pitch while working on an inclined hill, accordingly:

$$i = f(A_{mean}; X_{cab})$$

i.e. monitoring the mean acceleration of the vehicle and the cab position.

In view of the foregoing, the advantages of a suspension hydraulic arrangement 1 according to the invention are apparent.

Thanks to the proposed arrangement 1 is possible to provide a versatile system which can control the levelling and dampening of the suspension in an efficient way, thereby increasing operator's comfort.

The use of two different orifices in levelling module 2 allows to differentiate the velocity in raising and lowering of cylinder. Accordingly, it is possible to provide improved comfort while guaranteeing a good reactivity of the system.

The use of a valve 22 in parallel with orifice 21 allows to have a module 14 which can vary to provide a passive management of dampening of cylinder 3,when valve 22 is at is maximum restriction, and a substantially active suspension when fluid by-passes, at least partially, orifice 21.

Furthermore, it is possible to provide different background configuration, which allows the user to choose the dampening configuration of the cabin. Moreover, in parallel, feed-forwards controls allows to compensate in advance the effect of some working conditions of the work vehicle, thereby further increasing the comfort of the operator.

It is clear that modifications can be made to the described suspension hydraulic arrangement 1 which do not extend beyond the scope of protection defined by the claims.

For example, it is clear that the system may comprise a different accumulator module, comprising more accumulator 15 or that check valves and non-return valves or orifices may be substituted by elements having the same function.

Furthermore, it is clear that the system may be configured for a work vehicle comprising more than two cylinders 3, e.g. three of four cylinder (i.e. at three or all corners of the cab) and, as said, that cylinders 3 may be positioned upside down with respect to the described configuration.

Again, left and right cylinders 3 may be realized as independent and separated hydraulically one with respect to the other, e.g. thanks to a dedicated levelling module 2 for each cylinder 3.

Furthermore, valves 5 and 6 may be substituted by proportional valves.

**Claims**

1.  Suspension hydraulic arrangement (1) of a work vehicle for controlling at least one pair of cylinders (3), each cylinder (3) comprising a casing configured to be coupled to one between the cab and the chassis of said work vehicle and defining a space into which a piston may slide, carried by a rod configured to be coupled to the other between the cab and the chassis of said work vehicle, said piston sliding in tight manner into said casing, thereby dividing such space into a piston chamber (3a', 3b') and a rod chamber (3a", 3b"),

    said suspension hydraulic arrangement (1) comprising a levelling module (2) fluidly interposed between a source of fluid in pressure of said work vehicle and said at least one pair of cylinders (3), said levelling module (2) being configured to control the passage of fluid from said source to said cylinders (3),
    said suspension hydraulic arrangement (1) further comprising a fluid management module (14) and an accumulator module, said accumulator module being configured to store fluid in pressure and said fluid management module (14) being configured to regulate the passage of fluid from said accumulator module towards said piston and rod chambers (3a', 3b', 3a", 3b"), said fluid management module (14) comprising an orifice (21) and an electro actuated proportional valve (22) fluidly interposed in parallel between said accumulator module and said piston and rod chambers (3a', 3b', 3a", 3b").

2.  Suspension hydraulic arrangement according to claim 1, wherein said orifice (21) is a fixed dimension orifice.

3.  Suspension hydraulic arrangement according to claim 1 or 2, wherein said valve (22) is configured to assume a first position into which it allows passage of fluid from said accumulator module towards said piston and rod chambers (3a', 3b', 3a", 3b'') with a resistance higher than the resistance due to said orifice (21) and a second position into which it allows full fluidic communication between said accumulator module towards said piston and rod chambers (3a', 3b', 3a", 3b").

4.  Suspension hydraulic arrangement according to any of the preceding claims, wherein said fluid management module (14) comprises a first intermediate conduit (16) fluidly connecting said piston and rod chambers (3a', 3b', 3a", 3b") and a second intermediate conduit (17) fluidly connecting said accumulator module with said first intermediate conduit (16), said valve (22) and said orifice (21) being fluidly interposed in parallel between said first and second intermediate conduits (16, 17).

5.  Suspension hydraulic arrangement according to claim 4, wherein said fluid management module (14) comprises a check valve (18) fluidly interposed on said first intermediate conduit (16) and configured to allow passage of fluid only from said piston chamber (3a', 3b') to said road chamber (3a", 3b").

6.  Suspension hydraulic arrangement according to claim 4 or 5, wherein said fluid management module (14) comprises a check valve (19) fluidly interposed on said second intermediate conduit (17) and configured to allow passage of fluid only from said accumulator module (15) towards said first intermediate conduit (16).

7.  Suspension hydraulic arrangement according to any of claims 4 to 6, wherein said levelling module (2) is fluidly connected to said first intermediate conduit (16).

8.  Suspension hydraulic arrangement according to any of the preceding claims, wherein said levelling module (2) comprises a first port (2a) fluidly connectable to said source of fluid in pressure, a second port (2b) fluidly connectable to a discharge and a further port (2e) fluidly connected to said fluid management module (14), said levelling module (2) comprising a first and a second valves (5, 6) fluidly connected in series one with respect to the other between said first and second ports (2a, 2b) and said further port (2e).

9. Suspension hydraulic arrangement according to claim 8, wherein said first valve (5) is configured to assume a first position into which it allows passage of fluid between said first port (2a) and said second valve (6) and a second position wherein it allows the passage of fluid from said second valve and said second port (2b).

10. Suspension hydraulic arrangement according to claim 8 or 9, wherein said second valve (6) is configured to assume a first position into which it allows passage of fluid only from said first port (2a) to said further port (2e) and a second position wherein it allows restricted fluidic communication between said first port (2a) and said further port (2e).

11. Suspension hydraulic arrangement according to any of claims 8 to 10, wherein said levelling module (2) further comprises a first orifice (11) fluidly interposed between said first port (2a) and said first valve (5) and a second orifice (12) fluidly interposed between said second valve (6) and said further port (2e), said second orifice (12) having a lower dimension with respect to said first orifice (11).

12. Suspension hydraulic arrangement according to claim 11, further comprising a non-return valve (13) fluidly interposed in parallel to said second orifice (12), said non-return valve (13) allowing passage of fluid only from said second valve (6) towards said further port (2e).

13. Suspension hydraulic arrangement according to any of the preceding claims, further comprising sensor means configured to detect the position and/or pressure of said cylinders (3) and an electronic control unit electrically connected to said sensor means and configured to receive data related to vehicle operation, said electronic control unit being electrically connected to said valves (22, 5, 6) in order to control their operation on the base of an elaboration of the data collected by said cylinder an vehicle sensor means.

14. Method for controlling a suspension hydraulic arrangement (1) as claimed in any of the preceding claims and comprising the following steps:

   • Detecting operative conditions of said cylinders (3) and/or of said work vehicle;
   • Elaborating a control strategy according to the above detected operative conditions;
   • Control accordingly at least one between said valves (22, 5, 6).

15. Method according to claim 14, wherein said control strategy comprises in parallel:

   - a levelling control via said levelling module (2) configured to maintain the position of said cylinders within a preset range;
   - a sky-hook control via said fluid management module (14), wherein said valve (22) is controlled according to the following function:

$$i = f(V_{cab}; V_{chassis})$$

   wherein i is the current provided to said valve (22) and $V_{cab}$, $V_{chassis}$ being the velocities of said cab and said chassis of said work vehicles.

16. Method according to claim 15, wherein said sky-hook control comprises the optional step of varying the coefficient of said function to provide different values of fluid pressure inside said piston and rod chambers (3a', 3b', 3a", 3b").

17. Method according to claim 15 or 16, further comprising a feed-forward control, acting in parallel to said levelling and sky-hook controls, said feed-forward controls being related to work vehicles operative conditions.

18. Method according to claim 17, wherein said feed-forward controls comprise at least one between the following controls:

   - a first feedforward control to reduce cab squat/pitch in acceleration or deceleration, accordingly:

$$i = f(V_{current}; V_{target})$$

   wherein the current is function of the current velocity of the vehicle with respect to a target velocity to be reached by this latter;
- a second feedforward control to reduce cab dive/pitch while braking, accordingly:

$$i = f(V_{initial}; V_{final})$$

wherein the current is function of the initial velocity of the vehicle with respect to a target final decelerated velocity of this latter;
- a third feedforward control to reduce cab roll while turning or step steering, accordingly:

$$i = f(Steering_{angle}; Steering_{rate})$$

wherein the current is function of the steering angle and the steering rate of the vehicle;
- a fourth feedforward control to reduce cab pitch while changing travel direction, accordingly:

$$i = f(V_{current}; Shuttle_{request})$$

wherein the current is function of the current velocity of the vehicle and a shuttle request;
- a fifth feedforward control to reduce cab pitch while working on an inclined hill, accordingly:

$$i = f(A_{mean}; X_{cab})$$

wherein the current is function of the mean acceleration of the vehicle and the cab position.

**Patentansprüche**

1. Hydraulische Aufhängungsanordnung (1) für ein Arbeitsfahrzeug zur Steuerung von mindestens einem Paar von Zylindern (3), wobei jeder Zylinder (3) ein Gehäuse aufweist, das eingerichtet ist, um mit der Kabine oder dem Chassis des Arbeitsfahrzeugs gekoppelt zu werden, und das einen Raum definiert, in dem ein Kolben gleiten kann, der von einer Stange getragen wird, die eingerichtet ist, um mit dem anderen von Kabine bzw. Chassis des Arbeitsfahrzeugs gekoppelt zu werden, wobei der Kolben in eng anliegender Weise in dem Gehäuse gleitet, sodass der Raum in eine Kolbenkammer (3a', 3b') und eine Stangenkammer (3a", 3b") unterteilt wird,

   wobei die hydraulische Aufhängungsanordnung (1) ein Nivellierungsmodul (2) aufweist, das in Fluidverbindung zwischen einer mit Druck beaufschlagten Fluidquelle des Arbeitsfahrzeugs und dem mindestens einen Paar von Zylindern (3) angeordnet ist, wobei das Nivellierungsmodul (2) eingerichtet ist, um den Durchfluss von Fluid von der Quelle zu den Zylindern (3) zu steuern,
   wobei die hydraulische Aufhängungsanordnung (1) weiterhin ein Fluidsteuerungsmodul (14) und ein Speichermodul aufweist, wobei das Speichermodul eingerichtet ist, um mit Druck beaufschlagtes Fluid zu speichern, und das Fluidsteuerungsmodul (14) eingerichtet ist, um den Durchfluss des Fluids von dem Speichermodul zu den Kolben- und Stangenkammern (3a', 3b', 3a", 3b") zu steuern, wobei das Fluidsteuerungsmodul (14) eine Öffnung (21) und ein elektrisch betätigtes Proportionalventil (22) aufweist, das in Fluidverbindung zwischen dem Speichermodul und den Kolben- und Stangenkammern (3a', 3b', 3a", 3b") parallel geschaltet ist.

2. Hydraulische Aufhängungsanordnung nach Anspruch 1, wobei die Öffnung (21) eine Öffnung mit fester Abmessung ist.

3. Hydraulische Aufhängungsanordnung nach Anspruch 1 oder 2, wobei das Ventil (22) eingerichtet ist, um eine erste Position einzunehmen, in der es den Durchfluss von Fluid von dem Speichermodul zu den Kolben- und Stangenkammern (3a', 3b', 3a", 3b") mit einem Widerstand ermöglicht, der größer ist als der Widerstand infolge der Öffnung (21), und um eine zweite Position einzunehmen, in der es eine vollständige Fluidverbindung zwischen dem Speichermodul und den Kolben- und Stangenkammern (3a', 3b', 3a", 3b") ermöglicht.

4. Hydraulische Aufhängungsanordnung nach einem der vorhergehenden Ansprüche, wobei das Fluidsteuerungsmodul (14) eine erste zwischenliegende Leitung (16) aufweist, die die Kolben- und Stangenkammern (3a', 3b', 3a", 3b") in Fluidverbindung setzt, und eine zweite zwischenliegende Leitung (17) aufweist, die das Speichermodul mit der ersten zwischenliegenden Leitung (16) in Fluidverbindung setzt, wobei das Ventil (22) und die Öffnung (21) in Fluidverbindung zwischen der ersten und der zweiten zwischenliegenden Leitung (16, 17) parallel geschaltet sind.

5. Hydraulische Aufhängungsanordnung nach Anspruch 4, wobei das Fluidsteuerungsmodul (14) ein Rückschlagventil (18) aufweist, das in Fluidverbindung an der ersten zwischenliegenden Leitung (16) angeordnet ist und eingerichtet ist, um den Durchfluss von Fluid nur von der Kolbenkammer (3a', 3b') zur Stangenkammer (3a", 3b") zu ermöglichen.

6. Hydraulische Aufhängungsanordnung nach Anspruch 4 oder 5, wobei das Fluidsteuerungsmodul (14) ein Rückschlagventil (19) aufweist, das in Fluidverbindung an der zweiten zwischenliegenden Leitung (17) angeordnet ist und eingerichtet ist, um den Durchfluss des Fluids nur von dem Speichermodul (15) zur ersten zwischenliegenden Leitung (16) zu ermöglichen.

7. Hydraulische Aufhängungsanordnung nach einem der Ansprüche 4 bis 6, wobei das Nivellierungsmodul (2) mit der ersten zwischenliegenden Leitung (16) in Fluidverbindung steht.

8. Hydraulische Aufhängungsanordnung nach einem der vorhergehenden Ansprüche, wobei das Nivellierungsmodul (2) eine erste Anschlussöffnung (2a), die mit der druckbeaufschlagten Fluidquelle in Fluidverbindung bringbar ist, eine zweite Anschlussöffnung (2b), die in Fluidverbindung bringbar ist mit einem Auslass und einer weiteren Anschlussöffnung (2e), die mit dem Fluidsteuerungsmodul (14) in Fluidverbindung bringbar ist, wobei das Nivellierungsmodul (2) ein erstes und ein zweites Ventil (5, 6) aufweist, die eines in Bezug auf das andere zwischen der ersten und der zweiten Anschlussöffnung (2a, 2b) und der weiteren Anschlussöffnung (2e) in Fluidverbindung in Reihe geschaltet sind.

9. Hydraulische Aufhängungsanordnung nach Anspruch 8, wobei das erste Ventil (5) eingerichtet ist, um eine erste Position einzunehmen, in der es den Durchfluss von Fluid zwischen der ersten Anschlussöffnung (2a) und dem zweiten Ventil (6) ermöglicht, und um eine zweite Position einzunehmen, in der es den Durchfluss von Fluid zwischen dem zweiten Ventil und der zweiten Anschlussöffnung (2b) ermöglicht.

10. Hydraulische Aufhängungsanordnung nach Anspruch 8 oder 9, wobei das Ventil (6) eingerichtet ist, um eine erste Position einzunehmen, in der es einen Durchfluss von Fluid nur von der ersten Anschlussöffnung (2a) zur weiteren Anschlussöffnung (2e) ermöglicht, und um eine zweite Position einzunehmen, in der es eine begrenzte Fluidverbindung zwischen der ersten Anschlussöffnung (2a) und der weiteren Anschlussöffnung (2e) ermöglicht.

11. Hydraulische Aufhängungsanordnung nach einem der Ansprüche 8 bis 10, wobei das Nivellierungsmodul (2) weiterhin eine erste Öffnung (11) aufweist, die zwischen der ersten Anschlussöffnung (2a) und dem ersten Ventil (5) in Fluidverbindung steht, und eine zweite Öffnung (12) aufweist, die zwischen dem zweiten Ventil (6) und der weiteren Anschlussöffnung (2e) in Fluidverbindung steht, wobei die zweite Öffnung (12) eine geringere Abmessung bezüglich der ersten Öffnung (11) hat.

12. Hydraulische Aufhängungsanordnung nach Anspruch 11, weiterhin aufweisend ein Sperrventil (13), das mit der zweiten Öffnung (12) in Fluidverbindung parallel geschaltet ist, wobei das Sperrventil (13) den Durchfluss von Fluid nur von dem zweiten Ventil (6) zur weiteren Anschlussöffnung (2e) ermöglicht.

13. Hydraulische Aufhängungsanordnung nach einem der vorhergehenden Ansprüche, weiterhin aufweisend Sensoreinrichtungen, die eingerichtet sind, um die Position und/oder den Druck des Zylinders (3) zu erfassen, und eine elektronische Steuereinheit, die mit den Sensoreinrichtungen elektrisch verbunden ist und die eingerichtet ist, um Daten, die sich auf den Fahrzeugbetrieb beziehen, zu erhalten, wobei die elektronische Steuereinheit mit den Ventilen (22, 5, 6) elektrisch verbunden ist, um deren Betrieb auf Basis einer Verarbeitung der Daten, die durch die Zylinder- und Fahrzeugsensoreinrichtungen erfasst wurden, zu steuern.

14. Verfahren zur Steuerung einer hydraulischen Aufhängungsanordnung (1) nach einem der vorhergehenden Ansprüche, das die folgenden Schritte umfasst:

Erfassen von Betriebsbedingungen der Zylinder (3) und/oder des Arbeitsfahrzeugs;
Ausarbeiten einer Steuerungsstrategie gemäß der zuvor erfassten Betriebsbedingungen;
Entsprechendes Steuern mindestens eines der Ventile (22, 5, 6).

15. Verfahren nach Anspruch 14, wobei die Steuerungsstrategie parallel folgendes umfasst:

eine Nivellierungssteuerung durch das Nivellierungsmodul (2), die eingerichtet ist, um die Position der Zylinder in einem vorbestimmten Bereich beizubehalten;
eine Skyhook-Steuerung durch das Fluidsteuerungsmodul (14), wobei das Ventil (22) gemäß der folgenden Funktion gesteuert wird:

$$i = f(V_{Kabine}; V_{Chassis})$$

wobei i der Strom ist, der dem Ventil (22) zugeführt wird, und $V_{Kabine}$, $V_{Chassis}$ die Geschwindigkeiten der Kabine und des Chassis des Arbeitsfahrzeugs sind.

16. Verfahren nach Anspruch 15, wobei die Skyhook-Steuerung den optionalen Schritt des Veränderns des Koeffizienten der Funktion umfasst, um verschiedene Werte des Fluiddrucks in den Kolben- und Stangenkammern (3a', 3b', 3a", 3b") bereitzustellen.

17. Verfahren nach Anspruch 15 oder 16, weiterhin aufweisend eine Feedforward-Steuerung, die parallel zu den Nivellierungssteuerungen und Skyhook-Steuerungen arbeitet, wobei sich die Feedforward-Steuerungen auf die Arbeitsbedingungen des Arbeitsfahrzeugs beziehen.

18. Verfahren nach Anspruch 17, wobei die Feedforward-Steuerungen mindestens eine der folgenden Steuerungen umfasst:

eine erste Feedforward-Steuerung, um die Squat-Nickbewegung der Kabine bei Beschleunigung und Verzögerung zu reduzieren, gemäß:

$$i = f(V_{Ist}; V_{Soll})$$

wobei der Strom die Funktion der Ist-Geschwindigkeit des Fahrzeugs bezüglich einer zu erlangenden Soll-Geschwindigkeit des letzteren ist;
eine zweite Feedforward-Steuerung, um die Dive-Nickbewegung der Kabine beim Bremsen zu reduzieren, gemäß:

$$i = f(V_{Anfang}; V_{Ende})$$

wobei der Strom eine Funktion der Anfangsgeschwindigkeit des Fahrzeugs bezüglich der zu erlangenden verzögerten Endgeschwindigkeit des letzteren ist;
eine dritte Feedforward-Steuerung, um ein Wanken der Kabine während des Wendens oder eines Stufen-Lenkvorgangs zu reduzieren, gemäß:

$$i = f(Lenk_{winkel}; Lenk_{geschwindigkeit})$$

wobei der Strom eine Funktion des Lenkwinkels und der Lenkgeschwindigkeit des Fahrzeugs ist;
eine vierte Feedforward-Steuerung, um die Nickbewegung der Kabine während des Änderns der Bewegungsrichtung zu reduzieren, gemäß:

$$i = f(V_{Ist}; Hin\text{-}und\ Herbewegungs_{anforderung})$$

wobei der Strom eine Funktion der Ist-Geschwindigkeit des Fahrzeugs und einer Hin- und Herbewegungsanforderung ist;
eine fünfte Feedforward-Steuerung, um die Nickbewegung der Kabine zu reduzieren während an einem steilen Hügel gearbeitet wird, gemäß:

$$i = f(A_{Durchschnitt}; X_{Kabine})$$

wobei der Strom eine Funktion der durchschnittlichen Beschleunigung des Fahrzeugs und der Kabinenposition ist.

**Revendications**

1. Dispositif hydraulique de suspension (1) d'un véhicule de travail pour commander au moins une paire de vérins (3), chaque vérin (3) comprenant un corps conçu pour être accouplé à un élément parmi la cabine et le châssis dudit véhicule de travail et définissant un espace dans lequel un piston peut coulisser, supporté par une tige conçue pour être accouplée à l'autre élément parmi la cabine et le châssis dudit véhicule de travail, ledit piston coulissant d'une manière étanche dans ledit corps, séparant ainsi ledit espace en une chambre à piston (3a', 3b') et une chambre à tige (3a",3b"),

   ledit dispositif hydraulique de suspension (1) comprenant un module de mise à niveau (2) interposé fluidiquement entre une source de fluide pressurisé dudit véhicule de travail et ladite au moins une paire de vérins (3), ledit module de mise à niveau (2) étant conçu pour commander le passage de fluide à partir de ladite source auxdits vérins (3),
   ledit dispositif hydraulique de suspension (1) comprenant en outre un module de gestion de fluide (14) et un module d'accumulateur, ledit module d'accumulateur étant conçu pour stocker du fluide pressurisé et ledit module de gestion de fluide (14) étant conçu pour réguler le passage de fluide à partir dudit module d'accumulateur vers lesdites chambre à piston et chambre à tige (3a', 3b', 3a", 3b"), ledit module de gestion de fluide (14) comprenant un orifice (21) et une vanne proportionnelle actionnée électriquement (22) interposée fluidiquement en parallèle entre ledit module d'accumulateur et lesdites chambre à piston et chambre à tige (3a', 3b', 3a", 3b").

2. Dispositif hydraulique de suspension selon la revendication 1, dans lequel ledit orifice (21) est un orifice de dimensions fixes.

3. Dispositif hydraulique de suspension selon la revendication 1 ou 2, dans lequel ladite vanne (22) est conçue pour occuper une première position, dans laquelle elle permet le passage de fluide à partir dudit module d'accumulateur vers lesdites chambre à piston et chambre à tige (3a', 3b', 3a", 3b") avec une résistance supérieure à la résistance due audit orifice (21), et une deuxième position dans laquelle elle permet une communication fluidique complète entre ledit module d'accumulateur vers lesdites chambre à piston et chambre à tige (3a', 3b', 3a", 3b").

4. Dispositif hydraulique de suspension selon l'une quelconque des revendications précédentes, dans lequel ledit module de gestion de fluide (14) comprend un premier conduit intermédiaire (16) reliant fluidiquement lesdites chambre à piston et chambre à tige (3a', 3b', 3a", 3b") et un deuxième conduit intermédiaire (17) reliant fluidiquement ledit module d'accumulateur audit premier conduit intermédiaire (16), ladite vanne (22) et ledit orifice (21) étant interposés fluidiquement en parallèle entre lesdits premier et deuxième conduits intermédiaires (16, 17).

5. Dispositif hydraulique de suspension selon la revendication 4, dans lequel ledit module de gestion de fluide (14) comprend un clapet antiretour (18) interposé fluidiquement sur ledit premier conduit intermédiaire (16) et conçu pour permettre le passage de fluide uniquement à partir de ladite chambre à piston (3a', 3b') à ladite chambre à tige (3a", 3b").

6. Dispositif hydraulique de suspension selon la revendication 4 ou 5, dans lequel ledit module de gestion de fluide (14) comprend un clapet antiretour (19) interposé fluidiquement sur ledit deuxième conduit intermédiaire (17) et conçu pour permettre le passage de fluide uniquement à partir dudit module d'accumulateur (15) vers ledit premier conduit intermédiaire (16).

7. Dispositif hydraulique de suspension selon l'une quelconque des revendications 4 à 6, dans lequel ledit module de mise à niveau (2) est relié fluidiquement audit premier conduit intermédiaire (16).

8. Dispositif hydraulique de suspension selon l'une quelconque des revendications précédentes, dans lequel ledit module de mise à niveau (2) comprend une première ouverture (2a) pouvant être reliée fluidiquement à ladite source de fluide pressurisé, une deuxième ouverture (2b) pouvant être reliée fluidiquement à une évacuation et une autre ouverture (2e) reliée fluidiquement audit module de gestion de fluide (14), ledit module de mise à niveau (2) comprenant une première vanne et une deuxième vanne (5, 6) reliées fluidiquement en série l'une par rapport à l'autre entre lesdites première et deuxième ouvertures (2a, 2b) et ladite autre ouverture (2e).

9. Dispositif hydraulique de suspension selon la revendication 8, dans lequel ladite première vanne (5) est conçue pour occuper une première position, dans laquelle elle permet le passage de fluide entre ladite première ouverture (2a) et ladite deuxième vanne (6), et une deuxième position dans laquelle elle permet le passage de fluide à partir de ladite deuxième vanne et de ladite deuxième ouverture (2b).

10. Dispositif hydraulique de suspension selon la revendication 8 ou 9, dans lequel ladite deuxième vanne (6) est conçue pour occuper une première position dans laquelle elle permet le passage de fluide uniquement à partir de ladite première ouverture (2a) vers ladite autre ouverture (2e) et une deuxième position dans laquelle elle permet une communication fluidique limitée entre ladite première ouverture (2a) et ladite autre ouverture (2e).

11. Dispositif hydraulique de suspension selon l'une quelconque des revendications 8 à 10, dans lequel ledit module de mise à niveau (2) comprend en outre un premier orifice (11) interposé fluidiquement entre ladite première ouverture (2a) et ladite première vanne (5) et un deuxième orifice (12) interposé fluidiquement entre ladite deuxième vanne (6) et ladite autre ouverture (2e), ledit deuxième orifice (12) ayant une dimension inférieure par rapport à celle dudit premier orifice (11).

12. Dispositif hydraulique de suspension selon la revendication 11, comprenant en outre un clapet de retenue (13) interposé fluidiquement en parallèle audit deuxième orifice (12), ledit clapet de retenue (13) permettant le passage de fluide uniquement à partir de ladite deuxième vanne (6) vers ladite autre ouverture (2e).

13. Dispositif hydraulique de suspension selon l'une quelconque des revendications précédentes, comprenant en outre des moyens de détection conçus pour détecter la position et/ou la pression desdits vérins (3) et une unité de commande électronique couplée électriquement auxdits moyens de détection et configurée pour recevoir des données associées au fonctionnement du véhicule, ladite unité de commande électronique étant couplée électriquement auxdites vannes (22, 5, 6) afin de commander leur fonctionnement sur la base d'une élaboration des données collectées par ledit vérin et lesdits moyens de détection du véhicule.

14. Procédé de commande d'un dispositif hydraulique de suspension (1) selon l'une quelconque des revendications précédentes et comprenant les étapes suivantes consistant à :

   • détecter les conditions opérationnelles desdits vérins (3) et/ou dudit véhicule de travail ;
   • élaborer une stratégie de commande selon les conditions opérationnelles détectées ci-dessus ;
   • commander conformément au moins l'une parmi lesdites vannes (22, 5, 6).

15. Procédé selon la revendication 14, dans lequel ladite stratégie de commande comprend en parallèle :

   - une commande de mise à niveau par le biais du module de mise à niveau (2) configurée pour maintenir la position desdits vérins dans une plage préconçue ;
   - une commande Skyhook par le biais dudit module de gestion de fluide (14), ladite vanne (22) étant commandée selon la fonction suivante :

$$i = f(V_{cabine}; V_{châssis})$$

dans laquelle i est le courant fourni à ladite vanne (22) et $V_{cabine}$, $V_{châssis}$ étant les vitesses de ladite cabine et dudit châssis dudit véhicule de travail.

16. Procédé selon la revendication 15, dans laquelle ladite commande Skyhook comprend l'étape optionnelle de variation du coefficient de ladite fonction afin de fournir différentes valeurs de pression de fluide à l'intérieur desdites chambre à piston et chambre à tige (3a', 3b', 3a", 3b").

17. Procédé selon la revendication 15 ou 16, comprenant en outre une commande prédictive, agissant en parallèle auxdites commandes de mise à niveau et Skyhook, lesdites commandes prédictives étant associées aux conditions opérationnelles du véhicule de travail.

**18.** Procédé selon la revendication 17, dans lequel lesdites commandes prédictives comprennent au moins l'une parmi les commandes suivantes :

- une première commande prédictive pour réduire le cabré/le tangage de la cabine lors de l'accélération ou de la décélération, selon :

$$i = f(V_{actuelle};V_{cible})$$

dans laquelle le courant est fonction de la vitesse actuelle du véhicule par rapport à la vitesse cible à atteindre par ce dernier ;
- une deuxième commande prédictive pour réduire le piqué/le tangage de la cabine lors du freinage, selon :

$$i = f(V_{initiale};V_{finale})$$

dans laquelle le courant est fonction de la vitesse initiale du véhicule par rapport à une vitesse finale cible décélérée de ce dernier ;
- une troisième commande prédictive pour réduire le roulis de la cabine lors du virage ou du braquage graduel, selon :

$$i = f (angle_{braquage}; taux_{braquage})$$

dans laquelle le courant est fonction de l'angle de braquage et du taux de braquage du véhicule ;
- une quatrième commande prédictive pour réduire le tangage de la cabine lors du changement de sens du déplacement, selon :

$$i = f (V_{actuelle}; requête_{inversion})$$

dans laquelle le courant est fonction de la vitesse actuelle du véhicule et d'une requête d'inversion ;
- une cinquième commande prédictive pour réduire le tangage de la cabine tout en travaillant sur une pente inclinée, selon :

$$i = f (A_{moyenne}; X_{cabine})$$

dans laquelle le courant est fonction de l'accélération moyenne du véhicule et de la position de la cabine.

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005252699 A